# EUROPÄISCHE PATENTANMELDUNG

(11) **EP 2 700 540 A1**
(43) Veröffentlichungstag der Anmeldung: **26.02.2014**
(21) Anmeldenummer: 12181738.1
(22) Anmeldetag: 24.08.2012
(51) Int. Cl.: B60R 5/04, B62D 25/08, B60J 5/10

(54) **Laderaumerweiterung**

(71) Anmelder: Magna Steyr Fahrzeugtechnik AG & Co KG, 8041 Graz (AT)
(72) Erfinder: Erlacher, Manuel, 9545 Radenthein (AT); Kriegler, Wolfgang, 8051 Graz (AT); Rodler, Martin, 8160 Krottendorf (AT); Zachnegger, Harald, 8041 Graz (AT)
(74) Vertreter: Rausch, Gabriele

(57) **Zusammenfassung**

Eine Laderaumerweiterung für ein Kraftfahrzeug, umfassend eine Heckklappe (1) welche an der Unterseite schwenkbar am Kraftfahrzeug gelagert ist, so dass die Heckklappe (1) in eine horizontale Offenstellung schwenkbar ist, wobei die Laderaumerweiterung ein Rollo (2) umfasst, welches in der Offenstellung der Heckklappe (1) ausfahrbar und fixierbar ist, um einen Laderaum (3) über der Heckklappe zu begrenzen.

## Beschreibung

### Gebiet der Erfindung

Die vorliegende Erfindung betrifft eine Laderaumerweiterung für ein Kraftfahrzeug, umfassend eine Heckklappe welche an der Unterseite schwenkbar am Kraftfahrzeug gelagert ist, so dass die Heckklappe in eine horizontale Offenstellung schwenkbar ist.

### Stand der Technik

Kraftfahrzeuge mit einer Heckklappe, welche an der Unterseite schwenkbar am Kraftfahrzeug gelagert ist, so dass die Heckklappe in eine horizontale Offenstellung schwenkbar ist, sind bekannt. Der Raum oberhalb der heruntergeschwenkten Heckklappe ist üblicherweise kaum nutzbar, da er nach oben, nach hinten (in Fahrtrichtung) und seitlich nicht begrenzt ist und daher Ladegut nicht gesichert wäre.

Ebenso sind Laderaumerweiterungen an sich bekannt. Sie dienen dazu, einen vorhandenen Laderaum, beispielsweise einen Kofferraum eines Kraftfahrzeuges, zu erweitern, wozu oft weitere Bauteile im Bereich des Kofferraumes angebracht werden, wie zum Beispiel eine zusätzliche Bodenplatte, Abdeckplatten oder Planen. Diese Bauteile müssen in der Regel separat mitgeführt werden und bei Bedarf montiert werden.

Die DE 197 24 630 A1 offenbart einen Heckklappen-Ladesack für ein Kraftfahrzeug mit im Dachbereich angeschlagener Heckklappe, gebildet aus der hochgeklappten Heckklappe, einem den Heckbereich des Kraftfahrzeuges verlängernden Bodenabschnitt und einer Stoffbespannung. Die Stoffbespannung ist mit Schnellbefestigungsmitteln mit der Karosserie, der Heckklappe und der Bodenplatte verbindbar.

Aus der DE 103 29 992 A1 ist ein öffnungsfähiges Fahrzeugheck bekannt, mit einer zur Freigabe einer ersten Laderaumöffnung verfahrbaren Heckscheibe und mit einer darunter angeordneten, nach hinten über die Kontur des geschlossenen Fahrzeugs bewegbaren Heckklappe zur Freigabe einer zweiten Laderaumöffnung. Die Heckklappe ist in dieser Lösung Teil einer Laderaumverlängerung, die wie eine Schublade nach hinten aus dem Fahrzeug ausfahrbar ist. Die Heckklappe begrenzt dadurch in deren geschlossenem Zustand den erweiterten Laderaum nach hinten.

### Zusammenfassung der Erfindung

Es ist eine Aufgabe der Erfindung, eine verbesserte Laderaumerweiterung für ein Kraftfahrzeug anzugeben und insbesondere eine Laderaumerweiterung anzugeben, die einfach in Betrieb genommen werden kann und eine sichere Verwahrung von Ladegut ermöglicht.

Die Lösung der Aufgabe erfolgt durch eine Laderaumerweiterung für ein Kraftfahrzeug, umfassend eine Heckklappe welche an der Unterseite schwenkbar am Kraftfahrzeug gelagert ist, so dass die Heckklappe in eine horizontale Offenstellung schwenkbar ist, wobei die Laderaumerweiterung ein Rollo umfasst, welches in der Offenstellung der Heckklappe ausfahrbar und fixierbar ist, um einen Laderaum über der Heckklappe zu begrenzen.

Erfindungsgemäß ist der Raum oberhalb der heruntergeklappten Heckklappe als Laderaum nutzbar, dadurch dass ein Rollo als Begrenzungselement des Raumes über der Heckklappe nach oben, nach hinten (in Fahrtrichtung des Kraftfahrzeuges) und/oder seitlich verwendet wird. Dazu muss das Rollo in geeigneter Richtung ausfahrbar sein um den Raum oberhalb der geöffneten Heckklappe zu begrenzen und muss in der ausgefahrenen Position fixierbar sein.

Unter dem Begriff "Rollo" ist jede Art von Begrenzungselement zu verstehen, das in einem aktivierten Zustand eine flächige Begrenzung darstellt und mittels einer Rollobedienung in einen deaktivierten Zustand überführbar ist, in welchem das Begrenzungselement aufgerollt oder gefaltet ist.

Weiterbildungen der Erfindung sind in den abhängigen Ansprüchen, der Beschreibung sowie den beigefügten Zeichnungen angegeben.

Bevorzugt sind Steher zur Führung des Rollos aus der Heckklappe, insbesondere aus ersten Vertiefungen in der Heckklappe, hochschwenkbar. Das Rollo zur Begrenzung des erweiterten Laderaums wird an den Stehern geführt. Die Steher sind bevorzugt aus der Heckklappe hochschwenkbar, in der sie in einer Nicht-Gebrauchsstellung in einer Vertiefung ruhen.

Eine Querstrebe zur Verbindung der oberen Enden der Steher ist bevorzugt aus der Heckklappe, insbesondere aus einer zweiten Vertiefung in der Heckklappe, entlang der Steher hochführbar. Die Querstrebe dient insbesondere der Fixierung eines ausgefahrenen Rollos, welches den Laderaum oben oder hinten begrenzt oder zur Umlenkung eines Rollos welches den Laderaum sowohl oben als auch hinten begrenzt.

Die Querstrebe kann auch als gemeinsamer Bauteil mit den Stehern ausgeführt sein und beispielsweise zusammen mit den Stehern aus der Heckklappe hochschwenkbar sein.

Bevorzugt sind Längsstreben zur Verbindung der jeweils oberen Enden der Steher mit dem Kraftfahrzeug aus dem Kraftfahrzeug, insbesondere aus jeweiligen Vertiefungen im Kraftfahrzeug, hochschwenkbar. Die Längsstreben dienen insbesondere zur Fixierung ausgefahrener seitlicher Rollos und/oder zur Führung eines Rollos als obere oder seitliche Begrenzung des Laderaums.

Gemäß einer Ausführungsform der Erfindung ist das Rollo im nicht ausgefahrenen Zustand in der Heckklappe angeordnet, insbesondere in einer dritten Vertiefung der Heckklappe.

Gemäß einer Ausführungsform ist das Rollo im nicht ausgefahrenen Zustand in einer horizontalen Oberkante eines Heckklappenrahmens oder in einem Dachquerträger und/oder in zumindest einer vertikalen Seitenkante des Heckklappenrahmens angeordnet.

Besonders bevorzugt sind vier Rollos zur Begrenzung des erweiterten Laderaumes vorgesehen, wovon eines - zur Begrenzung nach hinten - in der Heckklappe, eines - zur Begrenzung nach oben - in einer horizontalen Oberkante eines Heckklappenrahmens oder in einem Dachquerträger und zwei weitere Rollos - zur seitlichen Begrenzung - in vertikalen Seitenkanten des Heckklappenrahmens angeordnet sind.

Bevorzugt begrenzt das Rollo im ausgefahrenen Zustand den Laderaum über der Heckklappe oben, hinten und / oder seitlich. Ein erfindungsgemäßes Rollo kann auch sowohl die obere als auch die hintere Begrenzung darstellen oder zumindest eine seitliche Begrenzung und die obere Begrenzung.

Bevorzugt werden die Begrenzungen des Laderaums, oben, hinten und/oder seitlich, durch zumindest zwei getrennt ausfahrbare Rollos gebildet.

Gemäß einer weiteren Ausbildung der Erfindung wird zumindest eine der Begrenzungen des Laderaums, oben, hinten oder seitlich, durch eine Wand gebildet, die insbesondere aus der Heckklappe ausschwenkbar ist. So können einzelne Begrenzungswände auch durch beispielsweise ausschwenkbare oder aufsteckbare Wände mit höherer Festigkeit als Rollos gebildet werden.

Selbstverständlich können die ersten, zweiten und dritten Vertiefungen der Heckklappe auch teilweise oder ganz zusammenfallen, so dass deren Funktion beispielsweise nur von einer einzigen oder von zwei geeignet geformten Vertiefungen erfüllt wird.

Selbstverständlich könnten alle dargestellten Bewegungen der Bauteile, wie zum Beispiel das Ausschwenken von Stehern, Längs- und Querstreben, Verschieben von Quer- und Längsstreben und Ausfahren und Fixieren von Rollos auch von einem beispielsweise elektromechanisch angetriebenen Aktuator durchgeführt werden.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Darstellung eines Hecks eines Kraftfahrzeuges.
- Fig. 2: ist eine weitere Darstellung eines Fahrzeughecks gem. Fig. 1.
- Fig. 3: ist eine weitere Darstellung eines Fahrzeughecks gem. Fig. 1.
- Fig. 4: ist eine Darstellung eines Fahrzeughecks gem. Fig. 1 mit erfindungsgemäßen Rollos.
- Fig. 5: ist eine weitere Darstellung eines Fahrzeughecks gem. Fig. 1 mit erfindungsgemäßen Rollos.
- Fig. 6: ist eine weitere Darstellung eines Fahrzeughecks gem. Fig. 1 mit erfindungsgemäßen Rollos.

### Detaillierte Beschreibung der Erfindung

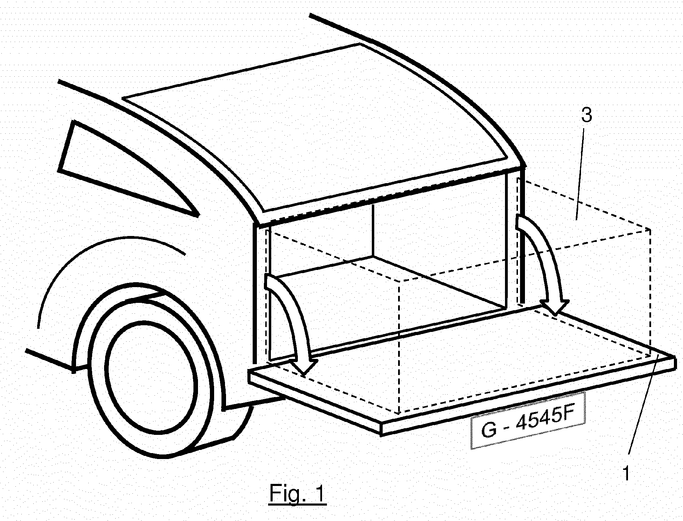

In Fig. 1 ist ein Heck eines Kraftfahrzeuges dargestellt, mit einer Heckklappe 1, die an der Unterseite schwenkbar am Kraftfahrzeug gelagert ist, so dass die Heckklappe 1 in eine horizontale Offenstellung nach unten schwenkbar ist. Oberhalb der Heckklappe 1 befindet sich der Laderaum 3, der in der dargestellten Ausführung weder nach oben, noch nach hinten oder seitlich begrenzt ist.

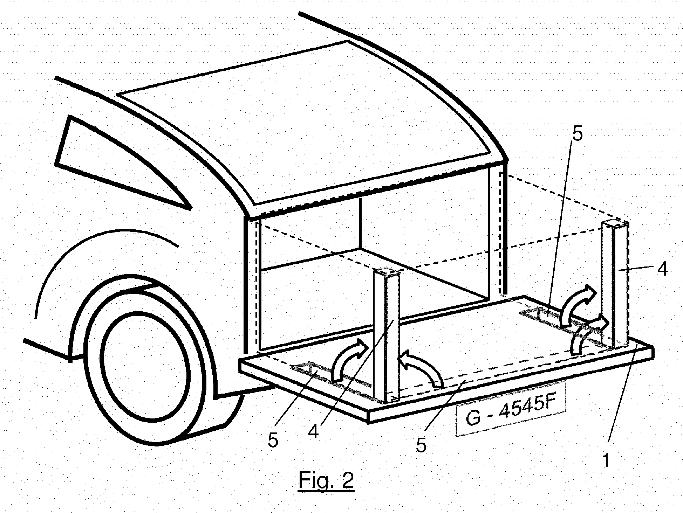

Aus Fig 2. ist ersichtlich, wie Steher 4 aus einer ersten Vertiefung 5 der Heckklappe 1 hochschwenkbar sind. Die Steher 4 können entweder parallel zur sich in geöffneter Stellung hinten befindlichen Oberkante der Heckklappe 1 ausschwenkbar sein oder auch parallel zu den Seitenkanten der Heckklappe 1. Natürlich wäre es auch möglich, z.B. wenn es durch beschränkten Bauraum erforderlich wäre, dass die Steher in anderen Richtungen, wie zum Beispiel diagonal hochschwenkbar sind.

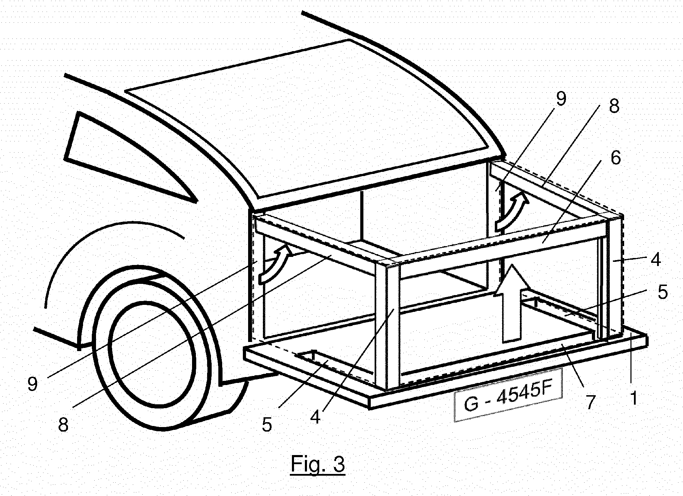

Wie in Fig. 3 dargestellt, kann eine Querstrebe 6 an den oberen Enden der Steher 4 befestigbar sein. Die dargestellte Querstrebe 6 ist dazu aus einer zweiten Vertiefung 7 in der Heckklappe 1 entlang der Steher 4 hochziehbar. Die Querstrebe 6 könnte in einer anderen Ausführung jedoch auch mit den Stehern 4 hochschwenkbar sein. Seitlich an der Heckklappe 1 sind Längsstreben 8 aus dem Fahrzeug ausschwenkbar. Streben, wie insbesondere die Längsstreben 8, können auch über einen Teleskopmechanismus in der Länge veränderbar sein, damit die Bauteile optimal aneinander passen.

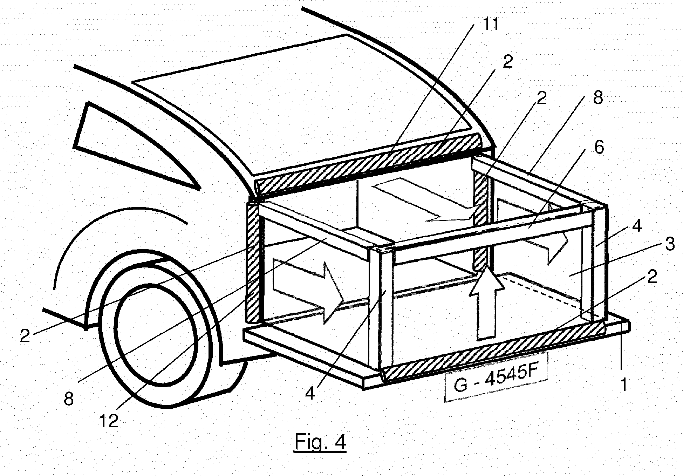

In Fig. 4 sind schließlich alle erforderlichen erfindungsgemäßen Bauteile dargestellt. Mehrere Rollos 2 können aus der Heckklappe 1, insbesondere aus einer dritten Vertiefung, einem Dachquerträger 11 und vertikalen Seitenkanten des Heckklappenrahmens 12 ausgefahren werden, in Richtung der dargestellten Pfeile, und sind an den bereits eingerichteten Stehern 4 und der Querstrebe 6 fixierbar. In einer anderen Ausführungsform könnte ein Rollo 2 vom Dachquerträger 11 bis zur in Offenstellung hinteren Kante der Heckklappe 1 durchgeführt sein.

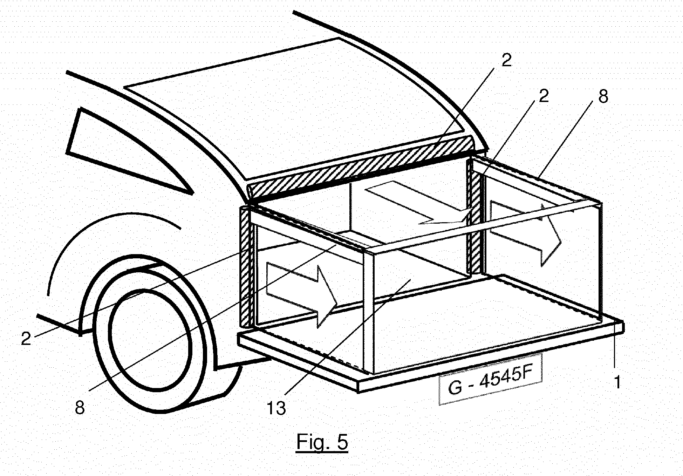

Einzelne der Begrenzungen des Laderaums 3 können auch als stabile Wände 13 ausgeführt sein. In Fig. 5 ist beispielsweise die hintere Begrenzung des Laderaums 3 als Wand 13 ausgeführt, während die seitliche und obere Begrenzung durch Rollos 2 bereitgestellt wird, die jeweils in Pfeilrichtung ausziehbar sind. In einer anderen Ausführungsform könnten beispielsweise zusätzlich die seitlichen Begrenzungen als Wände 13 ausgeführt sein und nur die obere Begrenzung des Laderaums 3 durch ein Rollo 2 gebildet sein.

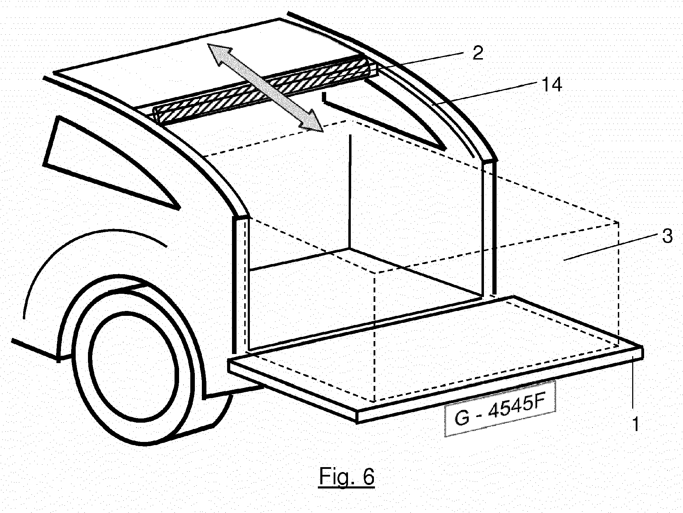

Wie in Fig. 6 dargestellt, kann ein Rollo 2 auch aus einem variabel in einem Dachlängsträger 14 führbaren Rollokasten ausfahrbar sein und so einen variablen offenen Laderaum 3 begrenzen. Mögliche Verschiebungen des Rollokastens in beiden Richtungen entlang des Dachlängsträgers 14 sind durch einen Pfeil angedeutet.

Die Erfindung ermöglicht in allen Ausführungsformen eine verbesserte Laderaumerweiterung für ein Kraftfahrzeug und insbesondere eine Laderaumerweiterung, die einfach in Betrieb genommen werden kann und eine sichere Verwahrung von Ladegut ermöglicht.

### Bezugszeichenliste

- 1: Heckklappe
- 2: Rollo
- 3: Laderaum
- 4: Steher
- 5: erste Vertiefung
- 6: Querstrebe
- 7: zweite Vertiefung
- 8: Längsstrebe
- 9: Vertiefung im Kraftfahrzeug
- 11: Dachquerträger
- 12: vertikale Seitenkante des Heckklappenrahmens
- 13: Wand
- 14: Dachlängsträger

## Patentansprüche

1. Laderaumerweiterung für ein Kraftfahrzeug, umfassend eine Heckklappe (1) welche an der Unterseite schwenkbar am Kraftfahrzeug gelagert ist, so dass die Heckklappe (1) in eine horizontale Offenstellung schwenkbar ist,
**dadurch gekennzeichnet, dass** die Laderaumerweiterung ein Rollo (2) umfasst, welches in der Offenstellung der Heckklappe (1) ausfahrbar und fixierbar ist, um einen Laderaum (3) über der Heckklappe zu begrenzen.

2. Laderaumerweiterung nach Anspruch 1,
**dadurch gekennzeichnet, dass** Steher (4) zur Führung des Rollos (2) aus der Heckklappe (1), insbesondere aus ersten Vertiefungen (5) in der Heckklappe (1), hochschwenkbar sind.

3. Laderaumerweiterung nach Anspruch 2,
**dadurch gekennzeichnet, dass** eine Querstrebe (6) zur Verbindung der oberen Enden der Steher aus der Heckklappe, insbesondere aus einer zweiten Vertiefung (7) in der Heckklappe, entlang der Steher hochführbar ist.

4. Laderaumerweiterung nach Anspruch 2 oder 3,
**dadurch gekennzeichnet, dass** Längsstreben (8) zur Verbindung der jeweils oberen Enden der Steher (4) mit dem Kraftfahrzeug aus dem Kraftfahrzeug, insbesondere aus jeweiligen Vertiefungen im Kraftfahrzeug (9), hochschwenkbar sind.

5. Laderaumerweiterung nach zumindest einem der vorstehenden Ansprüche,
**dadurch gekennzeichnet, dass** das Rollo im nicht ausgefahrenen Zustand in der Heckklappe angeordnet ist, insbesondere in einer dritten Vertiefung der Heckklappe.

6. Laderaumerweiterung nach zumindest einem der Ansprüche 1 bis 4,
**dadurch gekennzeichnet, dass** das Rollo im nicht ausgefahrenen Zustand in einer horizontalen Oberkante eines Heckklappenrahmens oder in einem Dachquerträger (11) oder in zumindest einer vertikalen Seitenkante des Heckklappenrahmens (12) angeordnet ist.

7. Laderaumerweiterung nach zumindest einem der vorstehenden Ansprüche,
**dadurch gekennzeichnet, dass** das Rollo im ausgefahrenen Zustand den Laderaum über der Heckklappe oben, hinten und / oder seitlich begrenzt.

8. Laderaumerweiterung nach zumindest einem der vorstehenden Ansprüche,
**dadurch gekennzeichnet, dass** die Begrenzungen des Laderaums, oben, hinten und/oder seitlich, durch zumindest zwei getrennt ausfahrbare Rollos gebildet werden.

9. Laderaumerweiterung nach zumindest einem der vorstehenden Ansprüche,
**dadurch gekennzeichnet, dass** zumindest eine der Begrenzungen des Laderaums, oben, hinten oder seitlich, durch eine Wand (13) gebildet wird, die insbesondere aus der Heckklappe ausschwenkbar ist.
